# FASCICULE DE BREVET EUROPEEN

(11) **EP 1 378 393 B1**
(45) Date de publication et mention de la délivrance du brevet: **08.12.2010**
(21) Numéro de dépôt: 03291672.8
(22) Date de dépôt: 04.07.2003
(51) Int. Cl.: B60Q 1/26, B60R 19/02, F21S 8/10

(54) **Dispositif de signalisation et pièce de carosserie de véhicule automobile munie d'un tel dispositif**
Signaleinrichtung und Karosserieteil für Kraftfahrzeug mit einer solchen
Signalling device and vehicle body part with such a device

(30) Priorité: 04.07.2002 FR 0208392
(43) Date de publication de la demande: 07.01.2004
(73) Titulaire: COMPAGNIE PLASTIC OMNIUM, 69007 Lyon (FR)
(72) Inventeur: Pommeret, Maelig, 69003 Lyon (FR); Delwal, Fabien, 01320 Chalamont (FR)
(74) Mandataire: de la Bigne, Guillaume Michel Marie

(56) Documents cités:
- EP-A- 0 945 672
- EP-A- 1 022 187
- EP-A- 1 167 869
- EP-A- 1 184 619
- FR-A- 2 567 991
- US-A- 5 590 945

## Description

La présente invention concerne un dispositif de signalisation de véhicule automobile et une pièce de carrosserie pouvant supporter un tel dispositif.

Il est déjà connu de placer, en différents endroits d'un véhicule automobile, des dispositifs lumineux matérialisant les contours du véhicule.

De tels dispositifs lumineux sont généralement des diodes électroluminescentes réunies en chapelets qui sont enfermées dans des boîtiers transparents, ajoutés ou incorporés à des organes externes ou collés derrière des vitres d'habitacle.

Ces dispositifs remplissent leur fonction et améliorent la sécurité de la circulation en rendant le véhicule mieux visible de nuit. Cependant, ils nécessitent des moyens coûteux tant pour leur fabrication que pour leur montage sur le véhicule. Ils constituent en outre des sources de panne et accroissent en conséquence le coût de l'entretien du véhicule.

Un autre inconvénient de ces dispositifs connus est que leur relative fragilité ne permet pas de les disposer n'importe où sur un véhicule.

Par ailleurs, ils n'offrent que des surfaces éclairées réduites et limitées par le nombre de led, ce qui constitue une limitation à la fois quant à l'efficacité de la signalisation obtenue et quant aux possibilités esthétiques qu'elles offrent.

Pour tenter de remédier à ces inconvénients, on a proposé dans l'état de la technique, notamment dans EP 1022187, un dispositif de signalisation, plus précisément un clignotant, agencé sur un rétroviseur, dont une portion de l'enveloppe est constituée par une pièce translucide servant de guide d'ondes lumineuses. Ainsi, des rayons lumineux issus de sources lumineuses ponctuelles, disposées exactement en regard de l'épaisseur de la pièce, sont diffusés par la face externe de la pièce, vers l'avant et le côté du véhicule. De fines nervures sont formées sur la face interne de la pièce translucide pour réfléchir les rayons lumineux dans la direction horizontale et éviter notamment leur diffusion vers le bas.

Dans un tel dispositif, un problème consiste en ce que la pièce translucide doit pouvoir résister aux chocs d'une part, et être suffisamment épaisse pour collecter efficacement les rayons émis par les sources lumineuses ponctuelles d'autre part, ce qui nécessite beaucoup de matière, d'où un poids, un encombrement et un prix importants.

On connaît par ailleurs de EP 1184619 une lampe pour véhicule automobile, comprenant un plateau translucide muni de rayons en saillie du plateau destinés à diffuser la lumière.

La présente invention vise à proposer un dispositif de signalisation résistant, nécessitant peu de matière et qui, en outre, est d'une réalisation et d'une utilisation particulièrement simples et économiques.

L'invention a pour objet un ensemble d'une pièce de carrosserie et d'un dispositif de signalisation pour véhicule automobile, tel que défini dans la revendication 1.

Ainsi, le dispositif de signalisation de l'invention est constitué par un guide d'ondes lumineuses, formé par la ou les nervures, et par un diffuseur de la lumière ainsi guidée, formé par la peau externe de la pièce translucide.

Grâce à l'invention, on dispose d'une pièce translucide suffisamment résistante, bien que comportant une peau translucide relativement fine. Par ailleurs, la fonction de guide d'onde étant assurée par la nervure, seule celle-ci doit être suffisamment épaisse pour recevoir toute la lumière issue des sources lumineuses ponctuelles, la peau peut donc être d'épaisseur plus fine que celle des sources lumineuses.

Un avantage remarquable de l'invention est que la pièce translucide n'a aucunement besoin d'être protégée contre des risques de détérioration. Au contraire, par sa ou ses nervures formant guides d'ondes, la pièce translucide bénéficie d'un renfort qui lui permet de remplir une fonction supplémentaire de protection de la carrosserie du véhicule.

Par exemple, la pièce translucide selon l'invention peut constituer un bandeau latéral de protection de portière, ou un bandeau de pare-chocs.

Elle peut également constituer une vitre de feux, réalisée dans une matière résistant aux chocs à l'instar de bourrelets et/ou bandeaux.

On comprend en outre que, grâce à son étendue importante, la pièce translucide de l'invention diffuse la lumière issue de la source lumineuse sur une surface qui est d'une part, beaucoup plus grande que celle offerte par la source lumineuse ponctuelle, d'autre part de forme quelconque.

Avantageusement, la nervure est conformée pour renvoyer vers la face externe des rayons lumineux pénétrant par une de ses faces.

Dans un mode de réalisation particulier, la nervure comporte une face opposée à la peau divisée en facettes orientées en marches d'escalier. Ces facettes ont pour fonction de réfléchir vers la face externe les rayons lumineux pénétrant dans la nervure.

Dans un autre mode de réalisation particulier, compatible avec les précédents, le dispositif est agencé pour être monté sur une pièce de carrosserie. Dans ce cas, ledit dispositif recouvre une partie de la pièce de carrosserie et peut ainsi assurer sa protection contre des chocs.

Compte tenu de la présence de la nervure, la peau translucide peut être bombée au droit de la nervure, en étant formée par deux flancs courbes rejoignant sensiblement un plan contenant la face opposée à la peau de la nervure.

Dans un mode de réalisation particulier, le dispositif comporte des moyens de fixation de sources lumineuses sur la nervure.

Ainsi, en cas de choc, si le dispositif de signalisation est embouti, les sources lumineuses qui sont liées à la nervure reculent selon le même mouvement et ne sont donc pas endommagées par l'emboutissement de la peau.

Selon un mode de réalisation de l'invention, la nervure comporte des moyens de fixation destinés à coopérer avec des moyens complémentaires portés par une pièce de carrosserie du véhicule.

Ainsi, grâce à ces moyens de fixation issus de moulage avec la nervure, la fixation du dispositif de signalisation sur le véhicule ne nécessite pas de pièces rapportées. Par ailleurs, l'épaisseur relativement importante de la nervure par rapport à la peau assure une fixation plus solide sur la pièce de carrosserie que dans le cas où des moyens de fixation seraient agencés sur la peau.

La présente invention a également pour objet une pièce de carrosserie de véhicule automobile qui est caractérisée en ce qu'elle comporte, sur sa surface externe, un logement pour recevoir un dispositif de signalisation tel que décrit ci-dessus.

Ce logement est de préférence formé en creux et présente une épaisseur sensiblement égale à celle des bords de la peau translucide, les contours dudit logement étant dimensionnés de manière à contenir exactement la peau, dont les bords affleurent la pièce de carrosserie à la périphérie du logement.

Afin de faciliter la compréhension de l'invention, des modes de réalisation fournis à titre d'exemples non limitatifs vont maintenant en être décrits, à l'aide des dessins annexés dans lesquels :
- la figure 1 est une vue en perspective d'un dispositif de signalisation selon un premier mode de réalisation de l'invention, placé sur une peau de pare-chocs,
- la figure 2 est une vue en coupe horizontale de la figure 1,
- la figure 3 est une vue en perspective d'un autre dispositif de signalisation selon l'invention,
- la figure 4 illustre le rendu visuel du dispositif de signalisation de la figure 3 en éclairage de nuit,
- la figure 5 est une vue en perspective d'un autre mode de réalisation d'un dispositif de signalisation selon l'invention, et
- la figure 6 est une vue en coupe horizontale de la figure 5.

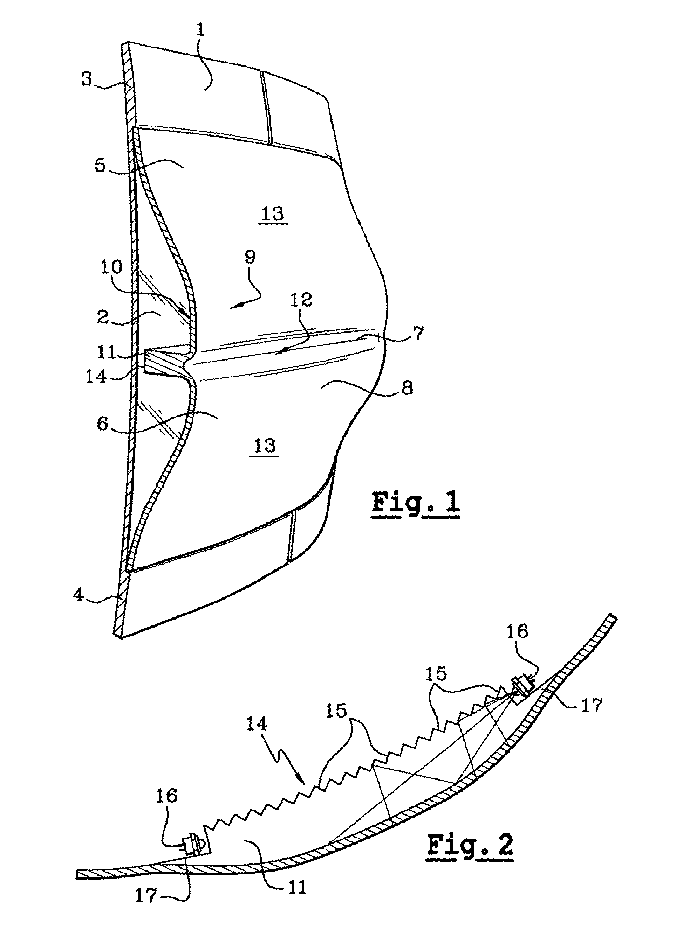

Sur la figure 1, on a partiellement représenté une peau de pare-chocs avant, ou bouclier 1, d'un véhicule automobile.

Ce bouclier 1 est peint, par un procédé connu, à la couleur des autres pièces de carrosserie du véhicule.

Dans sa région centrale, le bouclier 1 comporte un logement creux 2 qui est délimité par deux bandes longitudinales, l'une supérieure 3, l'autre inférieure 4.

Ce logement 2, délimité par les bandes supérieure 3 et inférieure 4, est obtenu par simple réduction d'épaisseur du bouclier.

Cette différence d'épaisseur est sensiblement égale à l'épaisseur des bords longitudinaux 5 et 6 d'un bandeau translucide 7 placé dans le logement 2.

Ce bandeau translucide 7 comprend une peau 8 présentant une face externe 9, visible depuis l'extérieur du véhicule, et une face interne 10 dirigée vers le bouclier 1. La peau 8 est relativement fine, elle a une épaisseur comprise entre 2,5 et 3 mm. Une nervure 11, réalisée d'un seul tenant avec la peau 8 du bandeau, fait saillie de la face interne 10 en direction du bouclier 1. Cette nervure 11 est également translucide, elle est plus épaisse que la peau 8, son épaisseur étant d'environ 5 mm, et se raccorde de manière continue, c'est-à-dire sans interruption de milieu, avec la peau du bandeau.

La face externe 9 du bandeau est conformée de manière à présenter une ligne de style 12 au droit de la nervure, afin de masquer l'effet de retassure qui résulte de la présence de la nervure 11.

La nervure 11 présente une section transversale sensiblement rectangulaire, à l'exception de sa face correspondant à la face externe du bandeau qui, comme cela vient d'être exposé, comporte un renfoncement formant une ligne de style 12. Du fait de la présence de la nervure 11, dont la hauteur est très supérieure à la profondeur du logement, le bandeau 7 présente une forme bombée qui place sa région centrale avoisinant la nervure en saillie du bouclier.

De part et d'autre de cette région centrale, le bandeau est formé par deux flancs courbes 13 à section en S qui se raccordent au bouclier 1 en rejoignant progressivement le fond du logement 2. Ainsi, les bords libres 5, 6 desdits flancs 13 aboutissent à un plan contenant la face 14 de la nervure opposée à la peau de la pièce translucide.

Comme on le voit à la figure 2, la face 14 de la nervure opposée à la peau 8 présente une multitude de facettes 15 disposées en escalier. Ces facettes constituent des surfaces de réflexion pour des rayons lumineux pénétrant dans la nervure 11 par ses extrémités, comme on le voit sur la figure 2, qui représente deux sources lumineuses ponctuelles 16 disposées chacune en regard d'une face d'extrémité de la nervure, en étant assujetties à un prolongement 17 de ladite nervure.

On remarque que pour assurer la propagation des ondes lumineuses sur toute la longueur du bandeau, alors que ce dernier est courbe, la nervure 11 est de préférence dimensionnée de manière que sa face 14 opposée à la peau soit proche d'une corde reliant les deux sources lumineuses 16.

Cette disposition n'est cependant pas indispensable, du fait que les rayons lumineux peuvent se réfléchir sur la face externe de la peau pour suivre la courbure du pare-chocs.

Les rayons lumineux, après une ou plusieurs réflexions sur la face externe et sur l'une des facettes de la nervure, aboutissent à la peau 8 selon un angle d'incidence voisin de l'angle droit. Les rayons lumineux ainsi orientés quittent alors le bandeau au droit de la nervure, laquelle produit un rayonnement lumineux dans la région centrale de la peau du bandeau.

A l'inverse, les bords libres 5, 6 des deux flancs du bandeau ne reçoivent que très peu de lumière du fait de leur proximité avec le fond du logement d'une part, avec les bandes supérieure et inférieure d'autre part.

Ainsi, les bords des flancs du bandeau prennent une couleur très voisine de celle du bouclier.

Les flancs constituent donc des zones continues de transition de couleur entre la couleur du bouclier et celle du bandeau, au droit de sa nervure.

Comme cela a déjà été expliqué, la nervure de la pièce translucide forme un guide d'ondes lumineuses qui achemine et distribue de manière homogène la lumière issue des sources lumineuses ponctuelles placées aux deux extrémités du bandeau.

Mais dans l'exemple décrit ici, la nervure remplit également une fonction structurelle en procurant un renfort mécanique au bandeau, ce qui permet à ce dernier de constituer une première barrière contre les chocs à faible énergie que peut subir le pare-chocs.

Toutes formes de nervures peuvent être envisagées selon l'invention.

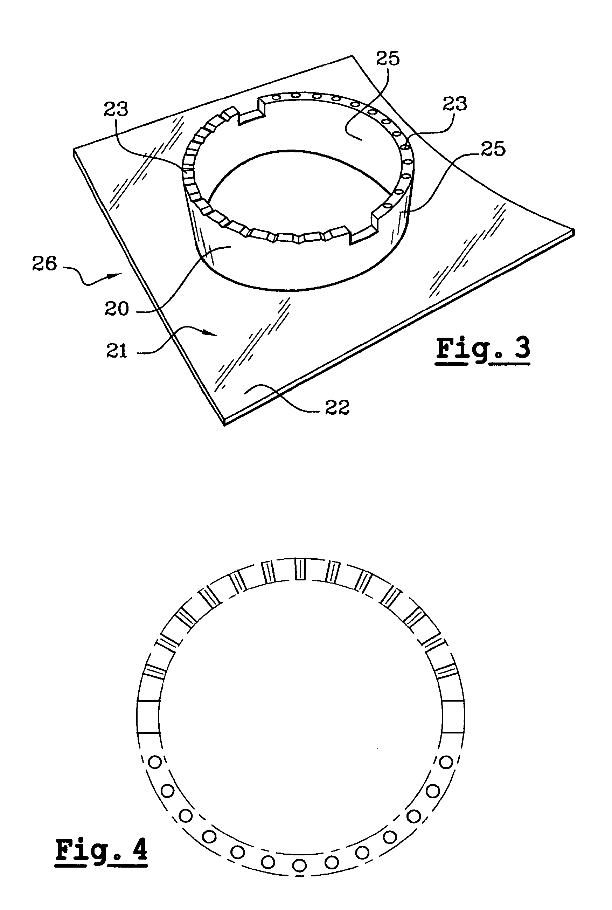

La figure 3 illustre un autre exemple de nervure 20 formée en saillie de la face interne 21 d'un dispositif de signalisation 22 conforme à l'invention.

Dans cet exemple, la nervure 20 est conformée en couronne, d'épaisseur relativement grande par rapport à l'épaisseur de la peau du dispositif 22. Elle comporte un certain nombre de facettes 23 disposées en escalier sur une moitié de sa face opposée à la face externe du dispositif de signalisation. Deux échancrures diamétralement opposées sont réservées pour l'installation de sources lumineuses (non représentées) dirigées tangentiellement à la couronne.

Dans ce cas, plus encore que dans l'exemple des figures 1 et 2, des rayons lumineux pénétrant dans la nervure 20 sont réfléchis par les faces latérales 25 de la nervure jusqu'à rencontrer une facette 23 qui les renvoie vers la face externe 26 de la pièce translucide.

Dans une moitié de la nervure 20, on a illustré une variante dans laquelle les facettes 23 sont remplacées par des orifices, agencés dans l'épaisseur de la nervure qui est suffisamment grande, aptes à recevoir chacun une source lumineuse. Dans ce cas, la nervure guide également les ondes lumineuses qui sont diffusées par la peau.

On a représenté, sur la figure 4, un exemple d'éclairage de la pièce 22 de la figure 3, vu de sa face externe.

On voit qu'à partir de seulement deux sources lumineuses, on peut générer un signal optique très visible bien qu'extrêmement bon marché à obtenir.

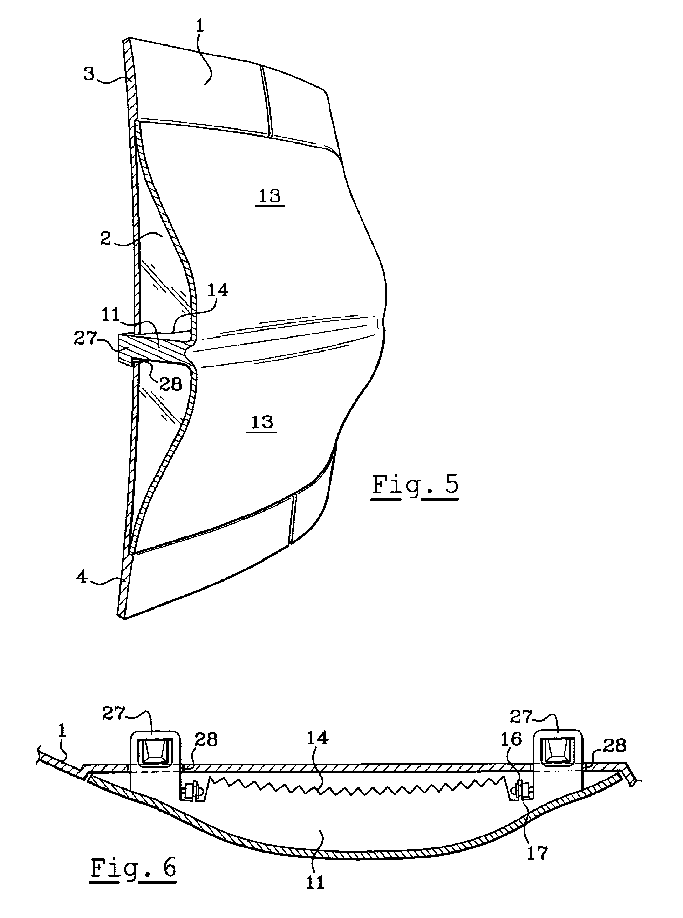

On peut voir sur le mode de réalisation de la figure 5 que la nervure 11 peut comporter des moyens 27 de fixation sur le bouclier 1. Ces moyens de fixation comprennent par exemple des clips 27, prolongeant la face 14 de la nervure 11, et destinés à être encliquetés dans des orifices complémentaires 28 agencés sur le bouclier 1.

La nervure 11 de la peau de la figure 6 comporte deux clips 27 pour assurer la fixation du dispositif sur le bouclier 1.

Selon un mode de réalisation non représenté, les moyens de fixation par encliquetage peuvent s'étendre continûment le long de la nervure 11 de façon à coopérer avec une fente agencée sur le bouclier 1.

Les modes de réalisation décrits ci-dessus n'ont été fournis qu'à titre d'exemples non limitatifs et pourront recevoir toute modification désirable sans sortir pour cela du cadre de l'invention.

## Revendications

1. Ensemble d'une pièce de carrosserie (1) et d'un dispositif de signalisation pour véhicule automobile, la pièce de carrosserie comportant, sur sa surface externe, un logement (2) formé en creux et présentant une épaisseur pour recevoir le dispositif de signalisation, le dispositif de signalisation étant constitué par une peau (8, 22) en matériau translucide présentant une face externe (9) destinée à être vue de l'extérieur du véhicule lorsque ledit dispositif est monté sur le véhicule et une face interne (10, 21) opposée à la face externe, la peau translucide comportant, en saillie de sa face interne, au moins une nervure (11, 20) réalisée d'un seul tenant avec la peau et dans le même matériau translucide que cette dernière, l'épaisseur de la nervure (11, 20) étant plus grande que celle de la peau translucide (8, 22), le dispositif de signalisation consistant en un guide d'ondes, formé par la nervure, et en un diffuseur de la lumière ainsi guidée, formé par la peau, la nervure étant d'une hauteur très supérieure à la profondeur du logement, la peau du dispositif de signalisation étant bombée au droit de la nervure.

2. Ensemble selon la revendication 1, dans lequel la nervure (11, 20) est conformée pour renvoyer des rayons lumineux pénétrant par une de ses faces en direction de la face externe (9) de la peau (8).

3. Ensemble selon la revendication 2, dans lequel, à l'opposé de la peau, la nervure (11, 20) comporte une face divisée en facettes (15, 23) orientées en marches d'escalier, afin de provoquer la réflexion vers la face externe (9) de rayons lumineux pénétrant dans la nervure.

4. Ensemble selon l'une quelconque des revendications 1 à 3, dans lequel la peau (8, 22) constitue un bandeau latéral de protection de portière, ou un bandeau de pare-chocs.

5. Ensemble selon la revendication 4, dans lequel la peau translucide (8) est bombée au droit de sa nervure (11) en étant formée par deux flancs courbes (13, 14) rejoignant sensiblement un plan contenant la face opposée à la peau de la nervure.

6. Ensemble selon l'une quelconque des revendications 1 à 5, dans lequel le dispositif de signalisation comporte des moyens de fixation de sources lumineuses (16) sur la nervure (11, 20).

7. Ensemble selon l'une quelconque des revendications 1 à 6, dans lequel la nervure (11) comporte des moyens de fixation (27) destinés à coopérer avec des moyens complémentaires (28) portés par la pièce de carrosserie (1).

8. Ensemble selon l'une quelconque des revendications 1 à 7, dans lequel le logement (2) est formé en creux et présente une épaisseur sensiblement égale à celle des bords (5, 6) de la peau translucide (8), les contours dudit logement étant dimensionnés de manière à contenir exactement la peau (8), dont les bords affleurent la pièce de carrosserie à la périphérie du logement.

9. Ensemble selon l'une quelconque des revendications 1 à 8, dans lequel, la peau (8) constituant un bandeau de pare-chocs, la nervure (11) est d'une hauteur très supérieure à la profondeur du logement, et, du fait de la présence de la nervure, le bandeau présente une forme bombée qui place sa région centrale avoisinant la nervure en saillie du pare-chocs.

10. Ensemble selon l'une quelconque des revendications précédentes, dans lequel le dispositif recouvre une partie de la pièce de carrosserie de façon à assurer sa protection contre des chocs.

## Claims

1. An assembly comprising a bodywork part (1) and a signaling device for a motor vehicle, the bodywork part including on its outside surface, a housing (2) that is recessed and presents thickness for receiving the signaling device, the signaling device being constituted by a skin (8, 22) of translucent material presenting an outside face (9) to be seen from outside the vehicle when said device is mounted on the vehicle, and an inside face (10, 21) opposite from the outside face, the translucent skin including at least one rib (11, 20) projecting from its inside face, the rib being made integrally with the skin and out of the same translucent material as the skin, with the thickness of the rib (11, 20) being greater than the thickness of the translucent skin (8, 22), the signaling device being constituted by a waveguide formed by the rib, and by a diffuser of the light guided in this way, as formed by the skin, the rib being of height that is much greater than the depth of the housing, the skin of the signaling device being convex over the rib.

2. An assembly according to claim 1, wherein the rib (11, 20) is shaped to reflect light rays penetrating the rib through one of its faces so that they travel towards the outside face (9) of the skin (8).

3. An assembly according to claim 2, wherein the rib (11, 20) includes a face opposite from the skin that is divided into facets (15, 23) in a staircase configuration so as to cause light rays penetrating into the rib to be reflected towards the outside face (9).

4. An assembly according to any one of claims 1 to 3, wherein the skin (8, 22) constitutes a bumper strip or a side strip for protecting a door.

5. An assembly according to claim 4, wherein the translucent skin (8) is convex over the rib (11), being formed with two curved flanks (13, 14) that run substantially into a plane containing the face of the rib that is opposite from the skin.

6. An assembly according to any one of claims 1 to 5, wherein the signaling device includes means for fixing light sources (16) to the rib (11, 20).

7. An assembly according to any one of claims 1 to 6, wherein the rib (11) has fixing means (27) for cooperating with complementary means (28) carried by the bodywork part (1).

8. An assembly according to any one of claims 1 to 7, wherein the housing (2) is recessed and presents thickness substantially equal to the thickness of the edges (5, 6) of the translucent skin (8), the outline of said housing being dimensioned in such a manner as to contain the skin (8) exactly so that its edges lie flush with the bodywork part at the periphery of the housing.

9. An assembly according to any one of claims 1 to 8, wherein the skin (8) constitutes a bumper strip, the rib (11) is of height that is much greater than the depth of the housing and, because of the presence of the rib, the strip presents a convex shape so that its central region close to the rib projects from the bumper.

10. An assembly according to any preceding claim, wherein the device covers a fraction of the bodywork part so as to protect it against impacts.

## Patentansprüche

1. Anordnung eines Karosserieteils (1) und einer Signalisierungsvorrichtung für ein Kraftfahrzeug, wobei das Karosserieteil auf seiner äußeren Fläche eine als Vertiefung ausgeführte Aufnahme (2) aufweist und eine Dicke hat, die es erlaubt, die Signalisierungsvorrichtung aufzunehmen, wobei die Signalisierungsvorrichtung aus einer Außenschale (8, 22) aus einem durchsichtigem Werkstoff besteht, welcher eine äußere Fläche (9) aufweist, die von außerhalb des Fahrzeugs sichtbar sein soll, wenn die Vorrichtung am Fahrzeug montiert ist, sowie eine der äußeren Fläche gegenüberliegende innere Fläche (10, 21), wobei die durchsichtige Außenschale mindestens eine auf der inneren Fläche hervorstehende Rippe (11, 20) aufweist, die in einem Stück mit der Außenschale hergestellt wird und aus dem gleichen Werkstoff wie letztere besteht, wobei die Dicke der Rippe (11, 20) größer als die der durchsichtigen Außenschale (8, 22) ist, wobei die Signalisierungsvorrichtung aus einem durch die Rippe gebildeten Wellenleiter und aus einem durch die Außenschale gebildeten Diffusor für das auf diese Weise geleitete Licht besteht, wobei die Rippe eine Höhe aufweist, die größer als die Tiefe der Aufnahme ist, wobei die Außenschale der Signalisierungsvorrichtung senkrecht zur Rippe gewölbt ist.

2. Anordnung nach Anspruch 1, wobei die Rippe (11, 20) so gestaltet ist, dass die Lichtstrahlen, die durch eine ihrer Flächen eindringen in Richtung der äußeren Fläche (9) der Außenschale (8) zurückgestrahlt werden.

3. Anordnung nach Anspruch 2, wobei die Rippe (11, 20) auf der der Außenschale gegenüberliegenden Seite eine in Facetten (15, 23) unterteilte Fläche aufweist, die treppenstufenförmig ausgerichtet sind, um zu erreichen, dass die in die Rippe eintretenden Lichtstrahlen zur äußeren Fläche (9) hin reflektiert werden.

4. Anordnung nach einem der Ansprüche 1 bis 3, wobei die Außenschale (8, 22) eine seitliche Türschutzleiste oder eine Stoßfängerleiste bildet.

5. Anordnung nach Anspruch 4, wobei die durchsichtige Außenschale (8) senkrecht zu ihrer Rippe (11) gewölbt ist und durch zwei gebogene Flanken (13, 14) gebildet wird, die im Wesentlichen eine Ebene, die die gegenüberliegende Fläche enthält, mit der Außenschale der Rippe zusammenführen.

6. Anordnung nach einem der Ansprüche 1 bis 5, wobei die Signalisierungsvorrichtung Mittel zur Befestigung von Lichtquellen (16) auf der Rippe (11, 20) aufweist.

7. Anordnung nach einem der Ansprüche 1 bis 6, wobei die Rippe (11) Befestigungsmittel (27) aufweist, die zum Zusammenwirken mit vom Karosserieteil (1) getragenen Komplementär-Mitteln (28) vorgesehen sind.

8. Anordnung nach einem der Ansprüche 1 bis 7, wobei die Aufnahme (2) als Vertiefung ausgeführt ist und eine Dicke aufweist, die im Wesentlichen gleich derjenigen der Kanten (5, 6) der durchsichtigen Außenschale (8) ist, wobei die Konturen der Aufnahme so dimensioniert sind, dass sie exakt mit der Außenschale (8) übereinstimmen, deren Kanten mit dem Karosserieteil auf dem Umfang der Aufnahme bündig abschließen.

9. Anordnung nach einem der Ansprüche 1 bis 8, wobei, wenn die Außenschale (8) eine Stoßfängerleiste bildet, die Rippe (11) eine Höhe hat, die deutlich größer als die Tiefe der Aufnahme ist, und aufgrund des Vorhandenseins der Rippe die Leiste eine gewölbte Form einnimmt, deren mittlerer Bereich unmittelbar neben der am Stoßfänger hervorstehenden Rippe zu liegen kommt.

10. Anordnung nach einem der vorhergehenden Ansprüche, wobei die Vorrichtung einen Teil des Karosserieteils dergestalt bedeckt, dass es gegen die Einwirkung von Stößen geschützt ist.
